# EUROPEAN PATENT SPECIFICATION

(11) **EP 2 821 273 B1**
(45) Date of publication and mention of the grant of the patent: **13.04.2016**
(21) Application number: 14174926.7
(22) Date of filing: 30.06.2014
(51) Int. Cl.: B60K 15/01

(54) **Automobile with a fuel piping structure**
Kraftfahrzeug mit einer Kraftstoffleitungsstruktur
Automobile avec une structure de tuyauterie de carburant

(30) Priority: 05.07.2013 JP 2013141747
(43) Date of publication of application: 07.01.2015
(73) Proprietor: Honda Motor Co., Ltd., Tokyo 107-8556 (JP)
(72) Inventor: Ogou, Yosuke, Saitama, 351-0193 (JP); Hara, Yukiyasu, Saitama, 351-0193 (JP); Ohkura, Kentaro, Saitama, 351-0193 (JP)
(74) Representative: Weickmann & Weickmann PartmbB

(56) References cited:
- CN-U- 201 703 245
- FR-A1- 2 699 252
- JP-A- H08 118 970
- JP-A- 2007 176 345
- JP-A- 2010 115 995

## Description

### FIELD OF THE INVENTION

The present invention relates to an automobile comprising a fuel piping structure, in which fuel is supplied from a fuel tank to an engine mounted in an engine room in front of a dash panel through a fuel piping made of a metal pipe.

### DESCRIPTION OF THE RELATED ART

Japanese Patent Application Laid-open No. 2004-161055 has made known a structure in which a rear end of a side sill, which is disposed in a front-rear direction along a side portion of a vehicle body of an automobile, and a rear end of a floor frame, which is disposed in the front-rear direction inside the side sill in a vehicle-width direction, are connected to a front end of a rear side frame, which is disposed in the front-rear direction in a rear portion of the vehicle body, thereby forming a Y-shaped frame, and a fuel piping and a high-voltage wiring are inserted through a crotch portion of the Y-shaped frame, such that the side sill and the floor frame function as a protector to protect the fuel piping and the high-voltage wiring from collision load.

JP H08 118970 A on which the preamble of claim 1 is based, deals with restricting the oscillation or declining of a fuel tank. An engine is mounted on the front part of a tractor and a fuel tank is mounted on the rear of the tractor. Fuel piping for supplying fuel from the fuel tank to the engine is connected to the front face of engine via a fuel filter.

In CN 201 703 245 U a fuel pipe is welded to stays.

In JP 2007 176345 A a fuel piping is disposed between the engine on the front side and the dash panel on the rear side, without defining any looseness.

### SUMMARY OF THE INVENTION

Meanwhile, in a case where fuel is supplied from a fuel tank mounted in a rear portion of a vehicle body to an engine mounted in an engine room in a front portion of the vehicle body, it is a general practice to dispose a fuel piping made of iron along a bottom portion of the vehicle body from the fuel tank to the engine room, and connect a downstream end of the fuel piping made of iron to the engine by means of a fuel piping made of rubber disposed in the engine room. In this case, the fuel piping does not pass through on a rear face of the engine. For this reason, when the engine is moved rearward by collision load at the time of frontal collision, there is no fear that the fuel piping is sandwiched and damaged between the rear face of the engine and a front face of a dash panel.

However, it is sometimes necessary to arrange the fuel piping downward from an upper portion of the front face of the dash panel along the rear face of the engine for layout reasons. For example, in case the engine is stopped because of running out of fuel, some automobiles are provided with a manual priming pump, in an intermediate portion of the fuel piping, for supplying the stopped engine with fuel refilled to the fuel tank. Such automobile requires that the priming pump should be provided in an upper portion of a dash panel, which is a position where the priming pump can be easily operated. In this case, since the fuel piping downstream of the priming pump is disposed between the rear face of the engine and the front face of the dash panel, it is necessary to take a measure to protect the fuel piping at the time of collision.

The present invention has been made in view of the above-described circumstances, and an object of the present invention is to prevent a fuel piping, which is disposed on a front face of a dash panel rearward of an engine, from being damaged when the engine is moved rearward by collision load at the time of frontal collision.

In order to achieve the object, according to a first aspect of the present invention, there is provided an automobile in accordance with claim 1.

The automobile has a fuel piping structure, in which fuel is supplied from a fuel tank to an engine mounted in an engine room in front of a dash panel through a fuel piping made of a metal pipe, wherein the structure comprises: an upper stay provided at a position higher than an upper face of the engine, on a front face of the dash panel; and a lower stay provided at a position facing a rear face of the engine, on the front face of the dash panel, the fuel piping is welded at an upstream welding portion thereof to the upper stay and at a downstream welding portion thereof to the lower stay, and the fuel piping is bent to have looseness between the upstream welding portion and the downstream welding portion.

According to the configuration of the first aspect, the fuel piping structure includes: the upper stay provided at a position higher than the upper face of the engine, on the front face of the dash panel; and the lower stay provided at a position facing the rear face of the engine, on the front face of the dash panel, and the fuel piping is welded at its upstream welding portion to the upper stay and at its downstream welding portion to the lower stay. Accordingly, when the engine is moved rearward by collision load at the time of frontal collision, the upper stay, which does not interfere with the engine, stays at its original position, while the lower stay, which faces the rear face of the engine, is pressed rearward, so that the distance between the upper stay and the lower stay increases. However, since the fuel piping is bent to have looseness between the upstream welding portion and the downstream welding portion, tensile load is not applied to the fuel piping so as to prevent damaging the fuel piping. As a result, it is possible to prevent the fuel piping from being damaged at the time of frontal collision of the vehicle, while increasing degree of freedom in layout by disposing the fuel piping rearward of the engine.

According to a second aspect of the present invention, in addition to the first aspect, an upstream end portion of the fuel piping is connected to a priming pump provided on an upper portion of the dash panel.

According to the configuration of the second aspect, since the priming pump is provided on an upper portion of the dash panel, it is possible to improve operability by disposing the priming pump at a position where an operator's hand can easily reach the priming pump. On the other hand, since the fuel piping, which extends downward from the priming pump toward the engine, is disposed between the rear face of the engine and the dash panel, there is a possibility that the fuel piping is damaged at the time of the frontal collision of the vehicle. However, since the fuel piping is protected by the configuration of the first aspect, both the operability of the priming pump and the protection of the fuel piping can be achieved.

According to a third aspect of the present invention, in addition to the first or second aspect, the upstream welding portion of the fuel piping is welded to the upper stay such that a downstream side thereof is inclined downward and rearward with respect to an upstream side thereof, and the downstream welding portion of the fuel piping is welded to the lower stay such that a downstream side thereof is inclined outward in a vehicle-width direction and downward with respect to an upstream side thereof.

According to the configuration of the third aspect, the upstream welding portion of the fuel piping is welded to the upper stay such that a downstream side thereof is inclined downward and rearward with respect to an upstream side thereof, and the downstream welding portion of the fuel piping is welded to the lower stay such that a downstream side thereof is inclined outward in the vehicle-width direction and downward with respect to an upstream side thereof. Accordingly, when the lower stay is displaced rearward by being pressed by the engine which is moved rearward by the collision load at the time of the frontal collision, the upstream welding portion and the downstream welding portion prevent large bending load from acting on the fuel piping, so that the fuel piping can be more effectively prevented from being damaged.

Note that a feed pipe 20 of an embodiment corresponds to the fuel piping of the present invention.

The above and other objects, characteristics and advantages of the present invention will be clear from detailed descriptions of the preferred embodiment which will be provided below while referring to the attached drawings.

### BRIEF DESCRIPTION OF THE DRAWINGS

FIG. 1 is a view of a dash panel of an automobile as viewed from an engine room side.
FIG. 2 is a view in a direction of an arrow 2 in FIG. 1.
FIG. 3 is a schematic diagram corresponding to a sectional view taken along a line 3-3 in FIG. 1.

### DESCRIPTION OF THE PREFERRED EMBODIMENT

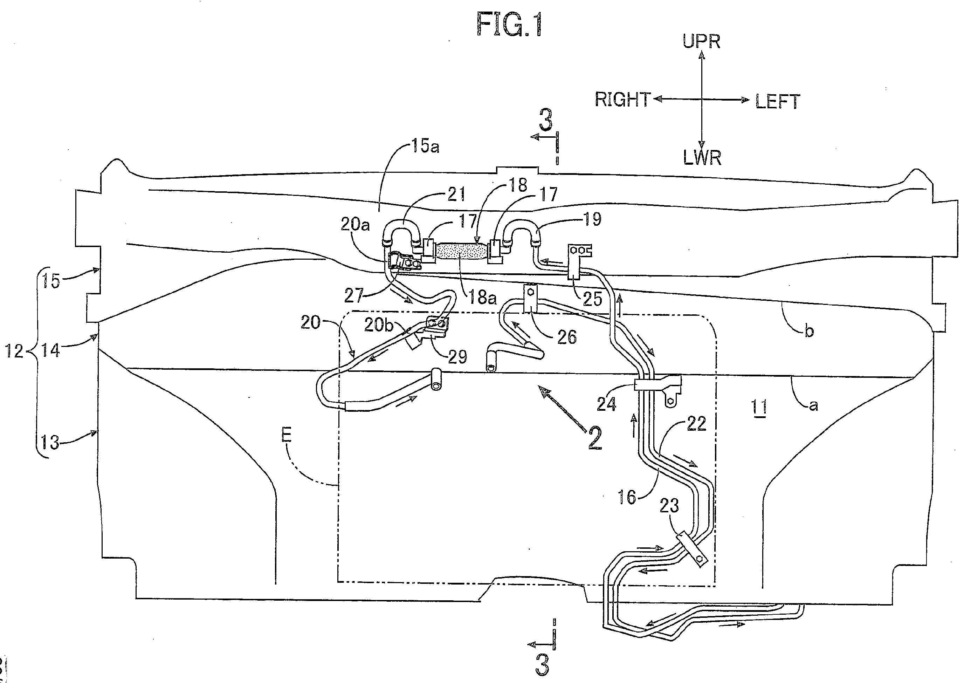

An embodiment of the present invention will be described below on the basis of FIGS. 1 to 3. Note that in the specification, a front-rear direction, a left-right direction (vehicle-width direction), and an up-down direction are defined on the basis of a driver who is seated on a driver's seat.

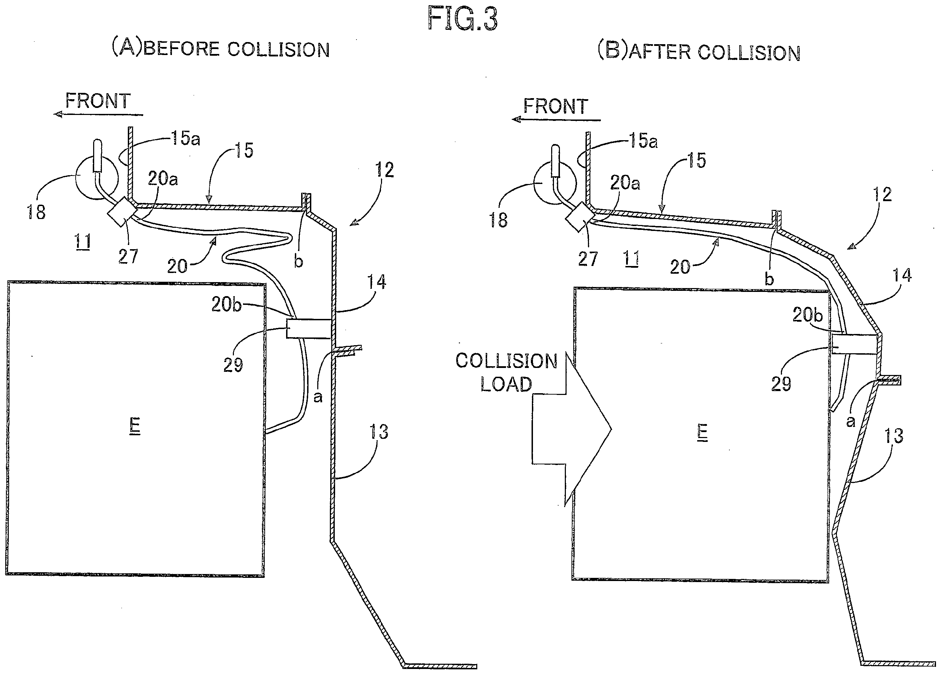

As shown in FIGS. 1 to 3, a dash panel 12, which divides an engine room 11 and a vehicle compartment of an automobile from each other, includes: a dash panel lower 13, which is disposed at the lowermost position and stands upright in the up-down direction; a dash panel upper 14, which is connected to an upper end of the dash panel lower 13 via a connection line a and extends upward; and a dash panel upper extension 15, which is connected to an upper end of the dash panel upper 14 via a connection line b and extends frontward. Accordingly, when viewed in the vehicle-width direction (see FIG. 3), the dash panel lower 13 and the dash panel upper 14 face a rear face of an engine E, and the dash panel upper extension 15, which projects frontward from a front end of the dash panel upper 14, faces an upper face of the engine E.

A feed pipe 16, which is made of an iron pipe, extends frontward along a lower face of a floor panel from a fuel tank mounted in a rear portion of a vehicle body. The feed pipe 16 is introduced into the engine room 11 from a left side of the dash panel lower 13, and is then disposed upward along front faces of the dash panel lower 13 and the dash panel upper 14. A flange portion 15a is formed by bending upward a front end of the dash panel upper extension 15, and a priming pump 18 is supported in the vehicle-width direction on a front face of the flange portion 15a by means of a pair of left and right attachment brackets 17. A downstream end of the feed pipe 16 and an upstream end of the priming pump 18 are connected by a rubber hose 19, which is formed in a U-shape. The priming pump 18 includes: a main body portion 18a, which is made of a rubber bag formed in a substantially cylindrical shape; and a suction valve and a discharge valve (not shown), which are check valves and arranged on opposite ends of the main body portion 18a. The priming pump 18 is configured such that an operator can grip and release the main body portion 18a with hand to open and close the suction valve and the discharge valve alternately, thereby causing the priming pump 18 to perform a pumping function.

A downstream end of the priming pump 18 and an upstream end of a feed pipe 20, which is made of an iron pipe, are connected by a rubber hose 21, which is formed in a U-shape. A downstream side of the feed pipe 20 extends downward along a front face of the dash panel 12 and is connected to the engine E. In addition, a return pipe 22, which is made of an iron pipe for returning excess fuel from the engine E to the fuel tank, is disposed to extend along the feed pipe 16 from an intermediate portion of the return pipe 22. Note that in FIG. 1, flowing directions of the fuel are indicated by arrows.

The feed pipe 16 and the return pipe 22 are fixed to the front face of the dash panel 12 by common stays 23, 24. A downstream side of the feed pipe 16 is fixed to the dash panel 12 by a stay 25, and an upstream side of the return pipe 22 is fixed to the front face of the dash panel 12 by a stay 26. Moreover, an upper stay 27 is fixed to the front face of the flange portion 15a of the dash panel upper extension 15 by two bolts 28, and a lower stay 29 is fixed to a front face of the dash panel upper 14 by two bolts 30.

The upper stay 27, which is made of iron, includes: a fixation portion 27a, which is fixed by the bolts 28; an arm portion 27b, which extends frontward from the fixation portion 27a; and a portion 27c to be welded, which is provided on a front end of the arm portion 27b. An upstream welding portion 20a of the feed pipe 20 is welded to the portion 27c to be welded by MIG welding. Similarly, the lower stay 29, which is made of iron, includes: a fixation portion 29a, which is fixed by the bolts 30; an arm portion 29b, which extends frontward from the fixation portion 29a; and a portion 29c to be welded, which is provided on a front end of the arm portion 29b. A downstream welding portion 20b of the feed pipe 20 is welded to the portion 29c to be welded by the MIG welding.

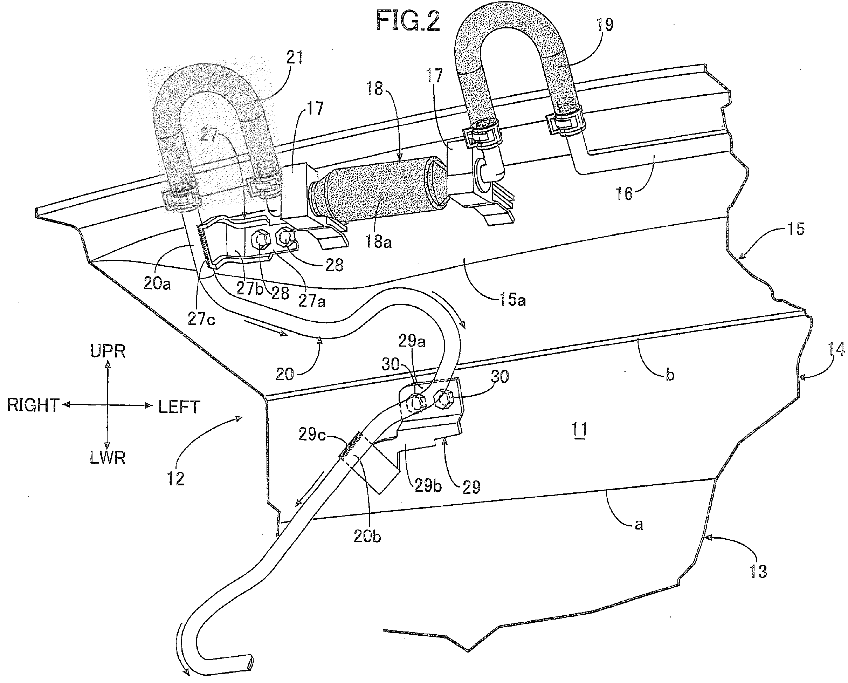

As is clear from FIG. 2, the upstream welding portion 20a of the feed pipe 20, which is welded to the upper stay 27 located at a high position, is welded such that a downstream side thereof is inclined downward and rearward with respect to an upstream side thereof. In addition, the downstream welding portion 20b of the feed pipe 20, which is welded to the lower stay 29 located at a low position, is welded such that a downstream side thereof is inclined downward and rightward in the vehicle-width direction with respect to an upstream side thereof. Then, the feed pipe 20 between the upstream welding portion 20a and the downstream welding portion 20b is disposed between a lower face of the dash panel upper extension 15 of the dash panel 12 and an upper face of the engine E in a state of being bent to have sufficient looseness.

Next, operation of the embodiment of the present invention including the above-described configuration will be described.

During operation of the engine E, fuel in the fuel tank is supplied to the engine E through a route from the feed pipe 16 to the rubber hose 19 to the priming pump 18 to the rubber hose 21 and then to the feed pipe 20, and excess fuel is returned to the fuel tank through the return pipe 22. At this time, the fuel just passes through the priming pump 18.

In a case where the engine E is stopped because of running out of fuel or the like, not only is the fuel in the fuel supply route replaced with air, but the engine E also cannot be started because the fuel supply is stopped. It thus becomes impossible to generate negative pressure for sucking the fuel from the fuel tank to the engine E. In such case, if the operator manually grips and releases the priming pump 18 to cause the priming pump 18 to perform the pumping function, thereby supplying the fuel in the fuel tank to the engine E, the engine E can be operated. At this time, since the priming pump 18 is provided at the dash panel upper extension 15 in an upper portion of the dash panel 12, the operator's hand can easily reach the priming pump 18, and workability is improved.

However, when the priming pump 18 is disposed in the upper portion of the dash panel 12, the feed pipe 20, which extends downward from the priming pump 18 to the engine E, is disposed between the rear face of the engine E and the front face of the dash panel 12. Therefore, when the engine E is moved rearward toward the dash panel 12 by collision load at the time of frontal collision of the automobile, there is a fear that the feed pipe 20 is sandwiched and damaged between the rear face of the engine E and the front face of the dash panel 12.

As is clear from FIG. 3, according to the embodiment, when the engine E is moved rearward by the collision load, the upper stay 27, which is located upward of the upper face of the engine E, does not interfere with the engine E, and thus stays at an original position and is not moved rearward. On the other hand, the lower stay 29, which faces the rear face of the engine E, is pressed by the engine E which is moved rearward, and is thus moved rearward while deforming the dash panel 12. For this reason, a distance between the upper stay 27 and the lower stay 29 increases. As a result, a distance between the upstream welding portion 20a welded to the upper stay 27 and the downstream welding portion 20b welded to the lower stay 29 increases to stretch the feed pipe 20 therebetween.

However, since the feed pipe 20 between the upstream welding portion 20a and the downstream welding portion 20b is bent to have sufficient looseness, large tensile load is prevented from acting on and damaging the feed pipe 20. In this way, both operability of the priming pump 18 and protection of the feed pipe 20 can be achieved.

In particular, the upstream welding portion 20a of the feed pipe 20, which is welded to the upper stay 27, is welded such that the downstream side thereof is inclined downward and rearward with respect to the upstream side thereof, and the downstream welding portion 20b of the feed pipe 20, which is welded to the lower stay 29, is welded such that the downstream side thereof is inclined downward and rightward in the vehicle-width direction with respect to the upstream side thereof. For this reason, when the lower stay 29 is moved rearward and the feed pipe 20 between the upstream welding portion 20a and the downstream welding portion 20b is stretched, the upstream welding portion 20a and the downstream welding portion 20b prevent large bending load from acting on the feed pipe 20, so that the feed pipe 20 can be more effectively prevented from being damaged.

Furthermore, since the lower stay 29 protrudes frontward from the front face of the dash panel 12, when the lower stay 29 is moved rearward by being pressed by the engine E which is moved rearward by the collision load, a space is secured between the rear face of the engine E and the front face of the dash panel 12 by the lower stay 29, so that the feed pipe 20 is hardly sandwiched between the engine E and the dash panel 12, thereby preventing the feed pipe 20 from being damaged.

Although the embodiment of the present invention has been described so far, various modifications in design can be made without departing from the gist of the present invention.

For example, the fuel piping of the present invention is not limited to that made of iron in the embodiment, but only has to be made of any metal.

Moreover, the present invention can be applied to any automobile in which a fuel piping for supplying fuel to an engine is disposed from an upper side to a lower side between a rear face of the engine and a front face of a dash panel, which does not necessarily have to include a priming pump.

A fuel piping structure for an automobile comprises: an upper stay 27 provided at a position higher than an upper face of an engine E, on a front face of a dash panel 12; and a lower stay 29 provided at a position facing a rear face of the engine E, on the front face of the dash panel 12. A fuel piping 20 is welded at its upstream welding portion 20a to the upper stay 27, and is welded at its downstream welding portion 20b to the lower stay 29. At the time of frontal collision, the lower stay 29 is pressed rearward by collision load so that a distance between the upper stay 27 and the lower stay 29 increases. However, since the fuel piping 20 is bent to have looseness between the upstream welding portion 20a and the downstream welding portion 20b, tensile load is not applied to the fuel piping 20 so as to prevent damaging the fuel piping 20.

## Claims

1. An automobile comprising a dash panel (12), an engine (E) mounted in an engine room (11) in front of the dash panel (12), a fuel tank, and a fuel piping structure through which fuel from the fuel tank is supplied to the engine (E),
**characterized in that**
the fuel piping structure comprises:
a fuel piping (20) which is made of a metal pipe and disposed from an upper side to a lower side between a rear face of the engine (E) and a front face of the dash panel (12);
an upper stay (27) provided at a position higher than an upper face of the engine (E), on a front face of the dash panel (12); and
a lower stay (29) provided at a position facing a rear face of the engine (E), on the front face of the dash panel (12),
the fuel piping (20) is welded at an upstream welding portion (20a) thereof to the upper stay (27) with respect to a flow direction of fuel in the fuel piping and at a downstream welding portion (20b) thereof to the lower stay (29) with respect to the fuel flow direction, and
the fuel piping (20) is bent to have looseness between the upstream welding portion (20a) and the downstream welding portion (20b),
wherein the looseness of the fuel piping (20) between the upstream welding portion (20a) and the downstream welding portion (20b) is set such that when the engine (E) is moved rearward due to load by a frontal collision of the automobile, the portion of the fuel piping (20) between the upstream and downstream welding portions (20a, 20b) is stretched and tensile load is prevented from acting on the fuel piping (20).

2. The automobile according to claim 1, wherein
an upstream end portion of the fuel piping (20) is connected to a priming pump (18) provided on an upper portion of the dash panel (12).

3. The automobile according to claim 1 or 2, wherein
the upstream welding portion (20a) of the fuel piping (20) is welded to the upper stay (27) such that a downstream side thereof is inclined downward and rearward with respect to an upstream side thereof, and
the downstream welding portion (20b) of the fuel piping (20) is welded to the lower stay (29) such that a downstream side thereof is inclined outward in a vehicle-width direction and downward with respect to an upstream side thereof.

## Patentansprüche

1. Kraftfahrzeug, welches eine Spritzwand (12), einen Motor (E), der in einem Motorraum (11) vor der Spritzwand (12) angebracht ist, einen Kraftstofftank sowie eine Kraftstoffrohrstruktur aufweist, durch die Kraftstoff von dem Kraftstofftank dem Motor (E) zugeführt wird,
**dadurch gekennzeichnet, dass**
die Kraftstoffrohrstruktur aufweist:
Kraftstoffrohr (20), das aus einem Metallrohr hergestellt ist und von einer Oberseite zu einer Unterseite zwischen einer Rückseite des Motors (E) und einer Vorderseite der Spritzwand (12) angeordnet ist;
eine obere Strebe (27), die an einer höheren Position als eine Oberseite des Motors (E) an einer Vorderseite der Spritzwand (12) vorgesehen ist; und
eine untere Strebe (29), die an einer zur Rückseite des Motors (E) weisenden Position an der Vorderseite der Spritzwand (12) vorgesehen ist,
wobei das Kraftstoffrohr (20) an seinem in Bezug auf eine Strömungsrichtung vom Kraftstoff in dem Kraftstoffrohr stromaufwärtigen Schweißabschnitt (20a) an die obere Strebe (27) geschweißt ist und an seinem in Bezug auf die Kraftstoffströmungsrichtung stromabwärtigen Schweißabschnitt (20b) an die untere Strebe (29) geschweißt ist, und
das Kraftstoffrohr (20) gebogen ist, so dass es einen Spielraum zwischen dem stromaufwärtigen Schweißabschnitt (20a) und dem stromabwärtigen Schweißabschnitt (20b) hat,
wobei der Spielraum des Kraftstoffrohrs (20) zwischen dem stromaufwärtigen Schweißabschnitt (20a) und dem stromabwärtigen Schweißabschnitt (20b) so gesetzt ist, dass, wenn der Motor (E) aufgrund einer Last durch Frontalkollision des Kraftfahrzeugs nach hinten bewegt wird, der Abschnitt des Kraftstoffrohrs (20) zwischen den stromaufwärtigen und stromabwärtigen Schweißabschnitt (20a, 20b) gestreckt wird und verhindert wird, dass eine Zuglast auf das Kraftstoffrohr (20) einwirkt.

2. Das Kraftfahrzeug nach Anspruch 1, wobei
ein stromaufwärtiger Endabschnitt des Kraftstoffrohrs (20) mit einer Primerpumpe (18) verbunden ist, die an einem oberen Abschnitt der Spritzwand (12) vorgesehen ist.

3. Das Automobil nach Anspruch 1 oder 2, wobei
der stromaufwärtige Schweißabschnitt (20a) des Kraftstoffrohrs (20) an die obere Strebe (27) derart geschweißt ist, dass seine stromabwärtige Seite in Bezug auf seine stromaufwärtige Seite nach unten und hinten geneigt ist, und
der stromabwärtige Schweißabschnitt (20b) des Kraftstoffrohrs (20) an die untere Strebe (29) derart geschweißt ist, dass seine stromabwärtige Seite in Fahrzeugbreitenrichtung nach außen und in Bezug auf seine stromaufwärtige Seite nach unten geneigt ist.

## Revendications

1. Automobile comprenant un tablier (12), un moteur (E) monté dans un compartiment moteur (11) devant le tablier (12), un réservoir de carburant, et une structure de tuyauterie de carburant à travers laquelle du carburant provenant du réservoir de carburant est fourni au moteur (E),
**caractérisée en ce que**
la structure de tuyauterie de carburant comprend :
une tuyauterie de carburant (20) qui est constituée d'un tuyau en métal et disposée à partir d'un côté supérieur vers un côté inférieur entre une face arrière du moteur (E) et une face avant du tablier (12) ;
un étai supérieur (27) prévu à une position plus haute qu'une face supérieure du moteur (E), sur une face avant du tablier (12) ; et
un étai inférieur (29) prévu à une position en regard d'une face arrière du moteur (E), sur la face avant du tablier (12),
la tuyauterie de carburant (20) est soudée au niveau d'une partie de soudage amont (20a) de celle-ci à l'étai supérieur (27) par rapport à une direction d'écoulement de carburant dans la tuyauterie de carburant et au niveau d'une partie de soudage aval (20b) de celle-ci à l'étai inférieur (29) par rapport à une direction d'écoulement de carburant, et
la tuyauterie de carburant (20) est cintrée pour avoir du jeu entre la partie de soudage amont (20a) et la partie de soudage aval (20b),
dans laquelle le jeu de la tuyauterie de carburant (20) entre la partie de soudage amont (20a) et la partie de soudage aval (20b) est réglé de sorte que, lorsque le moteur (E) est déplacé vers l'arrière en raison d'une charge par une collision frontale de l'automobile, la partie de la tuyauterie de carburant (20) entre les parties de soudage amont et aval (20a, 20b) soit étirée et empêche une charge de traction d'agir sur la tuyauterie de carburant (20).

2. Automobile selon la revendication 1, dans laquelle
une partie d'extrémité amont de la tuyauterie de carburant (20) est raccordée à une pompe d'amorçage (18) prévue sur une partie supérieure du tablier (12).

3. Automobile selon la revendication 1 ou 2, dans laquelle
la partie de soudage amont (20a) de la tuyauterie de carburant (20) est soudée à l'étai supérieur (27) de sorte qu'un côté aval de celle-ci soit incliné vers le bas et vers l'arrière par rapport à un côté amont de celle-ci, et
la partie de soudage aval (20b) de la tuyauterie de carburant (20) est soudée à l'étai inférieur (29) de sorte qu'un côté aval de celle-ci soit incliné vers l'extérieur dans une direction de la largeur du véhicule et vers le bas par rapport à un côté amont de celle-ci.
